# EUROPÄISCHE PATENTANMELDUNG

(11) **EP 1 307 026 A1**
(43) Veröffentlichungstag der Anmeldung: **02.05.2003**
(21) Anmeldenummer: 01125791.2
(22) Anmeldetag: 29.10.2001
(51) Int. Cl.: H04L 29/12, H04Q 3/00

(54) **Effiziente Änderung von Adressinformationen mit Hilfe von NAT und NAPT Routern bei getrennter Übertragung von Nutzdaten und Signalisierungsinformationen**

(71) Anmelder: SIEMENS AKTIENGESELLSCHAFT, 80333 München (DE)
(72) Erfinder: Hoffmann, Klaus, 81735 München (DE)

(57) **Zusammenfassung**

Die Erfindung betrifft ein Verfahren zur Änderung von Adressinformationen für Netze mit getrennter Übertragung von Nutzdaten und Signalisierungsinformationen, bei denen die Netzwerk-Verwaltung mit Hilfe des IN (Intelligent Network) Konzepts wahrgenommen wird und die Nutzdaten über ein Paketnetz (IPNET) übertragen werden. Im Rahmen des erfindungsgemäßen Verfahren werden die zu ändernden Adressinformationen der Signalisierungsinformationen in einem SSP (Service Switching Point) extrahiert, mit einem entsprechend angepassten INAP (Intelligent Network Application Part) an einen SCP (Service Control Point) übermittelt. Die Adressänderung wird im SCP mit Hilfe von dort bereitgestellten Mitteln vorgenommen. Die geänderten Adressinformationen werden anschließend zurück zum SSP übertragen. Die Erfindung benützt in effizienter Weise das IN Konzept zur Änderung von Adressinformationen von Signalisierungsinformationen. Nachteile herkömmlicher Verfahren werden vermieden.

## Beschreibung

Die Erfindung betrifft ein Verfahren zur Änderung von Adressinformationen für Netze mit getrennter Übertragung von Nutzdaten und Signalisierungsinformationen.

Die Trennung der Übertragung von Nutzdaten und Signalisierungsinformationen führt zu zusätzlichen vermittlungstechnischen Anforderungen, beispielsweise bei der Änderung von Adressinformationen.

. Es gibt Konstellationen, in denen es sinnvoll ist, eine Änderung von Adressinformationen im Zuge der Datenübertragung über ein Paketnetz durchzuführen. Die NAT (network address translation) Technik zielt auf eine größere Flexibilität bei der Adressvergabe von Host Adressen ab und ermöglicht eine Vergrößerung des Adressraums in Paketnetzen. Die Umsetzung von lokaler Adressinformationen mit Hilfe eines NAT Routers reduziert die Notwendigkeit zur Vergabe global gültiger und konsistenter Adressen. NAT Router werden deshalb häufig dafür verwendet, private Netze miteinander oder mit einem globalen, öffentlichen Netz zu verbinden. Bevor der NAT Router Pakete zu einem anderen Netz überträgt, trägt er lokal gültige Adressinformationen in Adressinformationen um, die in dem anderen Netz Gültigkeit haben. Eine entsprechende Umsetzung von Adressinformationen wird für aus dem anderen Netz ankommende Pakete vorgenommen.

Zudem kommt die NAT Technik bei der Verbindung verschiedener Adressbereiche eines Netzes zum Einsatz.

Für mehr Flexibilität bei Anwendungen in IP (Internet Protocol) Netzen wird häufig neben der IP-Adresse auch die Portadresse umgewandelt. Man spricht in diesem Zusammenhang von Network Address Port Translation (NAPT).

Für IP Netze sind Aspekte der Änderung von Adressinformationen mit Hilfe von NAT und NAPT Routern in dem Internet-Standard RFC 2663 (Request for Comments 2663) beschrieben.

Bei der Verwendung von NAT und NAPT Vorrichtungen in Zusammenhang mit SS7 (Signalling System no. 7) Netzen, bei denen Nutzdaten und Signalisierungsinformationen getrennt geführt werden, muss eine Änderung von Adressinformationen in Paketen mit Nutzdaten eine damit abgestimmte Änderung von Signalisierungsinformationen mit sich ziehen.

Es ist bekannt, für die Adressänderungen bei der Übertragung von Daten in SS7 Netzen eine zusätzliche TDM (time division multiplexing) Strecke (loop) vorzusehen. Diese Lösung erfordert zusätzliche Hardware.

Die Erfindung stellt sich zur Aufgabe, ein verbessertes Verfahren zur Änderung von Adressinformationen in SS7 Netzen anzugeben.

Die Aufgabe wird durch ein Verfahren nach Anspruch 1 gelöst.

Bei dem erfindungsgemäßen Verfahren wird das Netzwerk-Management entsprechend dem in der ITU (International Telecommunications Union) Q.1200 Serie beschriebenen IN (Intelligent Network) Konzept strukturiert. Zur Änderung von Adressinformationen werden bei einem SCP (Service Control Point) Mittel zur Adressänderung bereitgestellt. Die zu ändernden Adressinformationen werden in einem SSP (Service Switching Point) aus den Signalisierungsinformationen extrahiert und die extrahierten Adressinformationen mit Hilfe eines angepassten INAP (intelligent network application protocol) Protokolls an den SCP übermittelt. In dem SCP wird mit Hilfe der bereitgestellten Mittel die Änderung der Adressinformationen vorgenommen. Die geänderten Adressinformationen werden mit Hilfe eines angepassten INAP (Intelligent Network Application Part) Protokolls vom SCP zum SSP übertragen und die geänderte Adressinformationen in die Signalisierungsinformationen eingefügt (Anspruch 1).

Das Vorgehen nach Anspruch 1 benützt in effizienter Weise das IN (Intelligent Network) Konzept zur Änderung von Adressinformationen von Signalisierungsinformationen.

In der IN-Architektur sind drei Hierarchieebenen vorgesehen, die Managementebene, die Dienststeuerungsebene und die Vermittlungs- und Transportebene. Die Vermittlungsstellen - hier entsprechend der Literatur mit SSP (service switching point) bezeichnet - werden durch Steuerstellen - bezeichnet als SCP (service control point) der Dienststeuerungsebene gesteuert. Die für die Erfindung gegenständlichen Elemente SSP und SCP sind in dem ITU (International Telecommunications Union) Standard Q.1205 definiert. Die Übermittlung der zu ändernden und der geänderten Adressinformationen wird mit Hilfe des im Rahmen von IN Anwendungen benutzten INAP Protokolls vorgenommen. Allgemeine Aspekte des INAP Protokolls sind in dem ITU Standard Q.1205 niedergelegt.

Das erfindungsgemäße Verfahren erlaubt, Adressänderungen bei Nutzdatenübertragung im Paketnetz ohne zusätzlichen TDM Loop vorzunehmen. Die Mittel zur Änderung der Adressinformationen, z.B. Adresstranslationstabellen (Anspruch 3) werden in dem SCP vorgesehen und stehen so allen über den SCP gesteuerten Einrichtungen zur Verfügung. Eine der Adressinformationsänderung bei den Signalisierungsinformationen entsprechende Änderung der über ein Paketnetz übertragenen Nutzdaten kann in einem NAT Router oder einem NAT/NAPT Router vorgenommen werden (Anspruch 2). Ein NAT/NAPT Router erlaubt neben der Änderung von Hostadressen, z.B. IP (Internet Protocol) Adressen, eine Änderung von Portadressen.

Als Signalisierungsprotokoll können beispielsweise das BICC (bearer independent call control) Protokoll, das SIP-T (Session Initiation Protocol for telephony) oder ein für Paketnetzübertragung von Nutzdaten angepasstes ISUP (ISDN user part) Protokoll verwendet werden (Anspruch 5). Bei Verwendung des BICC Protokolls kann auf das BICC Informationselement BEARER CONTROL INFORMATION für die Änderung von Adressinformationen zurückgegriffen werden. Diese Informationselement beinhaltet Adressinformationen. Diese Adressinformationen können im SCP aus dem Informationselement extrahiert und geändert werden, nachdem es mit entsprechend angepassten bzw. erweiterten INAP Prozeduren vom SSP zum SCP übermittelt wurde (Anspruch 6). INAP Prozeduren, die entsprechend angepasst für die Adressinformationsänderung mit Hilfe des Informationselements BEARER CONTROL INFORMATION (Diese Informationselemente sind in den ITU-T Standards Q.765.5, Q.1970 und Q.1990 festgelegt).verwendet werden können sind INITIAL DP, CONNECT, EventReportBCSM und ContinueWithArgument (Anspruch 8).

Die Verwendung des Informationselements BEARER CONTROL INFORMATION erspart zusätzliche Änderungen. Alternativ kann ein zusätzlicher INAP Parameter eingeführt werden, der im Gegensatz zum Informationselement BEARER CONTROL INFORMATION nur die zu ändernde Adressinformation, beispielsweise IP Adressen, umfasst. Der Aufwand für die Einführung eines neuen Parameters hat als Vorteil eine Reduzierung des zwischen SSP und SCP übermittelten Datenvolumens. Zudem ist diese Implementierung nicht BICC spezifisch.

Bei einer Änderung von Adressinformationen beim Übergang zwischen zwei Domänen des Paketnetzes ist es gegebenenfalls wünschenswert in beiden Domänen Ressourcen für die Änderung von Adressinformationen bereitzustellen. Dazu
-- werden die Signalisierungsinformationen über zwei SSP geführt, von denen einer jeweils einer Domäne zugeordnet ist und jeweils die Adressänderungen von die zugeordnete Domäne verlassenden Signalisierungsinformationen vornimmt,
-- ist jedem der SSPs ein SCP zugeordnet, der die Änderung der Adressinformationen bewirkt, und
-- werden die Nutzdaten über zwei NAT Router oder NAT/NAPT Router geführt, von denen einer jeweils einer Domäne zugeordnet ist und jeweils die Adressänderungen von die zugeordnete Domäne verlassenden Nutzdaten vornimmt (Anspruch 9).

So können, beispielsweise bei zwei privat verwalteten Domänen, Informationen über die Netztopologie der einen Domäne jeweils von der anderen durch die Adressänderung unzugänglich gemacht werden. Auch bei öffentlichen Netzen können derartige Sicherheitsanforderung vorkommen, z.B. bei militärischen Einrichtungen. Der Begriff "Domäne" bezeichnet dabei einen abgegrenzten Adressraum, z.B. entsprechende des im Internet benützten DNS (Domain Name System). Eine ökonomische Lösung ist es, die Funktionen der beiden SCPs und der beiden NAT Router bzw. NAT/NATP Router jeweils in einer physikalischen Einheit zu realisieren (Anspruch 10). Dabei ergeben sich aber möglicherweise Berechtigungsfragen z.B. hinsichtlich des Zugriffs auf die gemeinsam benutzte Hardware. Eventuell ist eine von dem Domänen-Management unabhängige Verwaltung der von den Domänen gemeinsamen genutzten Hardware wünschenswert.

Die Funktionen des SSP können in einer üblicherweise mit MGC (Media Gateway Controller) abgekürzten Steuervorrichtung oder in einem CMN (call mediation node) realisiert werden (Ansprüche 12 und 13). Call mediation nodes sind im Rahmen des BICC Konzeptes optionale physikalische Elemente (siehe z.B. Q.1901).

Im Falle eine Änderung von Adressinformationen während eines Verbindungsaufbaus kann zur Änderung von Adressinformationen ein APP (application transport parameter) Parameter einer IAM (initial address message) auf Adressinformationen hin ausgewertet werden, und die Adressinformationen des APP Parameters geändert werden (Anspruch 14). Andere Lösungen zur Signalisierung von Adressinformationen als mit Hilfe des APP Parameters, beispielsweise prioritäre bzw. herstellerspezifische Methoden, sind auch denkbar.

Die Erfindung wird im folgenden anhand von zwei Figuren im Rahmen eines Ausführungsbeispiels dargestellt. Es zeigen
Fig.1: Ein System für die Verbindung zweier Netzbereiche
Fig.2: Ein System für die Verbindung zweier Netzbereiche mit Übertragung von Signalisierungsinformationen über zwei CMNs

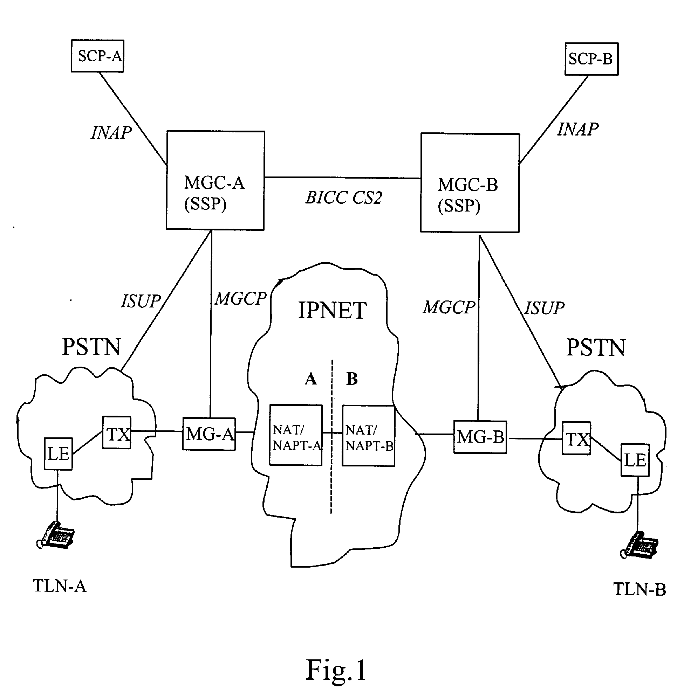

In Figur 1 ist ein System für die Verbindung zweier Netzbereiche dargestellt. In dem Ausführungsbeispiel wird eine Verbindung zweier PSTN (public switched telephone network) Endgeräte TLN-A und TLN-B über ein paketorientiertes Netz IPNET, beispielsweise ein auf dem Internet Protokoll basierendes Netz oder ein auf der ATM Technik basierendes Netz, geführt. Die beteiligten Endgeräte TLN-A und TLN-B sind beide an ein PSTN-Netz angeschlossen. Für die PSTN-Netze wird üblicherweise die Zeitmultiplextechnik - auch mit TDM (time division multiplexing) abgekürzt -, um Daten von verschiedenen Endgeräten bzw. Kanälen zusammenzuführen und über hochkapazitive Verbindungsleitungen - häufig als Trunk bezeichnet - zu übertragen. Nutzdaten und Steuerungsinformationen werden bei der Verbindung getrennt geführt, wie beim SS#7 Signalisierungssystem vorgesehen. Die Nutzdaten werden vom Endgerät TLN-A an eine teilnehmernahe Endvermittlungsstelle LE und von dort an eine Transitvermittlungsstelle TX übertragen. Die Transitvermittlungsstelle TX ist mit einem Netzzugangselement MG-A (MG: für Media Gateway) verbunden, das für die Bearbeitung von TDM Nutzdaten zur Übertragung über ein Paketnetz IPNET vorgesehen ist. Über das Paketnetz IPNET im Rahmen einer Sprachanwendung übertragene Nutzdaten werden empfängerseitig wieder von einem Netzzugangselement MG-B bearbeitet, um dann über ein PSTN Netz zuerst zu einer Transitvermittlungsstelle TX und schließlich zu einer teilnehmernahen Endvermittlungsstelle LE und dem Teilnehmerendgerät TLN-B übertragen zu werden.

Für das Ausführungsbeispiel wird angenommen, dass im Rahmen der Verbindung zwischen den Endgeräten TLN-A und TLN-B Adressänderungen beim Transport von Nutzdaten zwischen zwei Bereichen bzw. Domänen A und B des Paketnetzes IPNET vorgenommen werden. Die Trennung der zwei Bereiche ist mit Hilfe einer durchbrochenen Linie in der Figur angedeutet. Die Adressänderungen werden durch NAT/NAPT Router NAT/NAPT-A mit Hilfe von Adresstranslationstabellen für die Nutzdaten durchgeführt. Im Rahmen des Ausführungsbeispiels sind Adressänderungen für den Datenaustausch in beide Übertragungsrichtungen der Verbindung vorgesehen, weshalb zwei miteinender verbundene NAT/NAPT Router NAT/NAPT-A und NAT/NAPT-B auf verschiedenen Seiten der Domänengrenze vorgesehen sind. Eine solche Konstellation ist typischerweise bei dem Übergang zwischen zwei privaten Paketnetzbereichen gegeben. Beim Zusammenschluss eines privaten Netzbereichs mit einem öffentlichen werden im Regelfall nur NAT/NAPT Router auf der Seite des privaten Netzbereichs positioniert werden. Bei dem Ausführungsbeispiel werden Änderungen von IP Adressen und Portadressen beim Aufbau einer Verbindung über das Paketnetz IPNET beschrieben. Eine erfindungsgemäße Adressänderung kann aber auch nur die IP Adresse betreffen. Im Rahmen des Ausführungsbeispiels wird angenommen, dass Adressinformationen für beide Domänen zu ändern sind. Im Zuge der Übertragung von Informationen über die Domänengrenze vom Bereich A zum Bereich B werden einmal Adressinformationen, die sich auf die Adresse des A-seitigen Senders und einmal Adressinformationen, die sich auf die Adresse des B-seitigen Empfängers beziehen, geändert. Dadurch gibt es in den beiden Bereichen A und B mehr Freiheit bei der Adressvergabe. An Hand der Adressierung können nicht so leicht Details über die jeweilige Netztopologie innerhalb des Bereichs erschlossen werden.

Die Signalisierungsinformationen zum Aufbau der Verbindung werden zu der Steuereinheit MGC-A (MGC: für Media Gateway Controller) übermittelt, der die A-seitige Netzzugangseinheit MG-A zugeordnet ist. Zur Steuerung des Verbindungsaufbaues kommuniziert die Steuereinheit MGC-A mit dem A-seitigen Netzzugangseinheit MG-A und der B-seitigen Steuereinheit MGC-B. Im Rahmen des IN Konzepts entsprechen die Steuereinheiten MGC-A und MGC-B üblicherweise mit SSP (service switching point) bezeichneten physikalischen Elementen der Vermittlungsebene. Das ist in der Figur durch die in Klammern gesetzte Abkürzung SSP kenntlich gemacht.

Entsprechend dem IN Konzept werden Steuerfunktionen von einem SCP, SCP-A für den Bereich A und SCP-B für den Bereich B, wahrgenommen. Die Bezugszeichen der für den Austausch von Signalisierungsinformationen verwendeten Protokolle sind in der Figur kursiv geschrieben. Über die PSTN-Netze an die Steuereinheiten MGC-A und MGC-B übermittelte Signalisierungsinformationen werden mit Hilfe des ISUP (ISDN user part) Protokolls übertragen. Für den Austausch von Informationen zwischen den Steuereinheiten MGC-A und MGC-B und den Netzzugangseinrichtungen MG-A und MG-B wird ein evtl. herstellerspezifisch angepasstes Mediagatewaykontrolprotokoll MGCP verwendet. Alternativ dazu kann die Kommunikation zwischen den Steuereinheiten MGC-A und MGC-B und den Netzzugangseinrichtungen MG-A bzw. MG-B auch mit Hilfe des von der ITU (International Telecommunications Union) standardisierten H.248 Protokolls erfolgen. Die Signalisierung zwischen den beiden Steuereinheiten MGC-A und MGC-B geschieht mit Hilfe des BICC CS2 Protokolls. Alternativ kann ein herstellerspezifisch angepasstes ISUP Protokoll ISUP+ oder das SIP-T (Session Initiation Protocol) verwendet werden. Für den Austausch von Signalisierungsinformationen zwischen SSP und SCP wird das für die Änderung von Adressinformationen erweiterte INAP Protokoll verwendet.

In den ITU Veröffentlichungen Q.762 und Q.763 sowie den Entwürfen zu Q.763 (Addendum) und Q.765 ist aufgezeigt, dass beim ISUP und dem auf dem ISUP aufbauenden BICC der Verbindungsaufbau mit Hilfe einer Verbindungsaufbaunachricht IAM (initial address message), die ein Parameterfeld APP (application transport parameter) umfasst, initiiert wird. Aus dem Parameterfeld APP einer in der Steuereinheit MGC-A ankommender Verbindungsaufbaunachricht IAM werden zu ändernde Adressinformationen extrahiert. Diese Informationen werden dann an den SCP der Steuereinheit übermittelt.

Im folgenden wird der Ablauf des erfindungsgemäße Verfahren am Beispiel eines Erfindungsaufbaus erläutert. Der Einfachheit halber wird angenommen, dass nur IP Adressen geändert werden. Die Änderung von anderen Adressinformationen, beispielsweise Port-Adressen würde analog erfolgen. Im Rahmen des Verbindungsaufbaus werden die den Netzzugangseinrichtungen MG-A und MG-B für das Senden von Nutzdatenpaketen mit Zieladressen versorgt. Der Verbindungsaufbau wird mit Hilfe einer von der Steuereinheit MGC-A an die Steuereinheit MGC-B übertragenen IAM (initial address message) vorgenommen, die ein Parameterfeld APP umfasst, welches die IP Adresse der Netzzugangsreinrichtung enthält.

Das Verfahren kann auch in anderen Konstellationen, beispielweise der Änderung einer bestehenden Verbindung, zum Einsatz kommen. Die IP Adresse der Netzzugangseinrichtung MG-A wird im SCP SCP-A entsprechend der dort vorgesehenen Adresstranslationstabellen geändert und die geänderte IP Adresse wieder von dem SCP SCP-A zum SSP bzw. zur Steuereinheit MGC-A übermittelt. Die geänderte IP Adresse wird dann in das Parameterfeld APP der IAM eingetragen. Die IAM, deren Übertragung während der Änderung der Adressinformationen noch zurückgehalten wird, wird anschließend im Rahmen des Verbindungsaufbaus an die Steuereinrichtung MGC-B gesendet. Von der Steuereinrichtung MGC-B wird die geänderte IP Adresse der Netzzugangseinrichtung MG-A extrahiert und an die Netzzugangseinrichtung MG-B übermittelt. Diese geänderte IP Adresse der Netzzugangseinrichtung MG-A dient der Netzzugangseinrichtung MG-B als Zieladresse für das Senden von Nutzdatenpaketen an die Netzzugangseinrichtung MG-A. Im Zuge des weiteren Erfindungsaufbaus wird auch die Netzzugangseinrichtung MG-A mit einer Zieladresse versorgt. Zu diesem Zwecke wird eine Nachricht mit der Zieladresse von der Steuereinrichtung MGC-B an die Steuereinrichtung MGC-A übermittelt. Dabei wird die IP Adresse der Netzzugangseinrichtung MG-B im SCP SCP-B entsprechend der dort vorgesehenen Adresstranslationstabelle geändert. Die Netzzugangseinrichtung MG-A erhält als Zieladresse für die Verbindung mit dem Endgerät die geänderte IP Adresse der Netzzugangseinrichtung MG-B.

Bei der Übertragung von Nutzdatenpaketen zwischen den Netzzugangseinrichtungen MG-A und MG-B verwendet die jeweilige Netzzugangseinrichtung die eigene IP Adresse als Ursprungsadresse und die geänderte IP Adresse der anderen Netzzugangseinrichtung als Zieladresse. Ein Nutzdatenpaket, das von der Netzzugangseinrichtung MG-A gesendet wird, läuft zunächst über den NAT Router NAT/NAPT-A, wo die Ursprungsadresse des Paketes geändert wird. Die geänderte Adresse entspricht der Netzzugangseinrichtung MG-B für das senden von Paketen an die Netzzugangseinrichtung MG-A mitgeteilten Zieladresse. Das Paket mit der geänderten Ursprungsadresse wird im folgenden an den NAR Router NAT/NAPT-B übertragen. Dort wird die Zieladresse des Paketes, die der geänderten IP Adresse der Netzzugangseinrichtung MG-B entspricht durch die wirklich IP Adresse von MG-B ersetzt und an die Netzzugangseinrichtung MG-B weitergesendet.

Die Übermittlung der Adressinformationen zwischen den SSP und SCP wird mit Hilfe des dafür angepassten bzw. erweiterten INAP Protokolls durchgeführt. Dabei kann das entweder mit Hilfe des Informationselements BEARER CONTROL INFORMATION oder durch die Definition eines neuen INAP Parameters geschehen. Das Informationselement BEARER CONTROL INFORMATION enthält in einem auf dem SDP (session description Protocol) basierenden Format sich auf Nutzdatenübertragung beziehende IP Adress- und Portadressinformationen. Dieses Informationselement wird mit der dafür erweiterten INAP Prozedur INITIAL DP von dem SSP an den SCP übermittelt. In dem SCP sind Mittel zur Bearbeitung des Informationselements und zur Extraktion der Adressinformationen vorgesehen. Nach der Änderung mit Hilfe der Adresstranslationstabellen werden die geänderten Adressinformationen dann mit der dafür angepassten INAP Prozedur CONNECT an die Steuereinrichtung MGC-A bzw. MGC-B übermittelt.

Im Rahmen des IN Konzepts können auf der Vermittlungsebene für den Austausch von Steuerinformationen zwischen Steuerungs- und Vermittlungsebene Erkennungspunkte gesetzt bzw. definiert werden (siehe Q.1224). Diese Erkennungspunkte werden in der IN Terminologie mit DP (detection point) abgekürzt. Bei einem DP können Signalisierungsinformationen, die eine SCP-SSP Interaktion erfordern, detektiert werden und ein Informationsaustausch zwischen SCP und SSP zur Verbindungs- bzw. Dienststeuerung ausgelöst werden. Wenn ein DP gesetzt ist, kann das Informationselement BEARER CONTROL INFORMATION mittels der dafür angepassten INAP Prozedur EventReportBCSM von dem SSP an den SCP übermittelt und mit der entsprechend angepassten INAP Prozedur ContinueWithArgument die neuen Adressinformationen von dem SCP an den SSP übertragen werden. Die Prozeduren EventReportBCSM und ContinueWithArgument können beispielsweise bei der Änderung einer bestehenden Verbindung oder bei der Umwandlung der IP Adressen für die Rückwärtsrichtung (von B nach A) beim Verbindungsaufbau) zum Einsatz kommen.

Alternativ zur Verwendung des Informationselements BEARER CONTROL INFORMATION kann ein neues INAP Informationselement definiert werden, welches nur die relevanten Adressinformationen, z.B. IP Adressen und Portadressen, nicht aber weitere in dem Informationselement BEARER CONTROL INFORMATIOM umfasste Informationen enthält.

Das BICC Protokoll erlaubt optional die Verwendung von physikalischen Elementen die mit CMN (Call Mediation Node) bezeichnet werden (aber ohne direkten Zugriff auf Nutzdaten-Router/Media Gateways) ,welche auch mit SSP Funktionalität versehenen werden könnten. (siehe z.B. den ITU-T Standard Q.1901 und für eine Zusammenfassung der IN-relevanten Begriffe Q.1290). Alternativ können die Adressinformationen, die bei einem Erfindungsaufbau beispielsweise in der APP der IAM bzw. der Rücknachricht mit der Zieladresse für die Netzzugangseinrichtung MG-A enthalten sind, auch in den Steuereinheiten MGC-A und MGC-B zwischengeschalteten CMNs (call mediation node) CMN-A und CMN-B, die durch die SCPs SCP-A bzw.

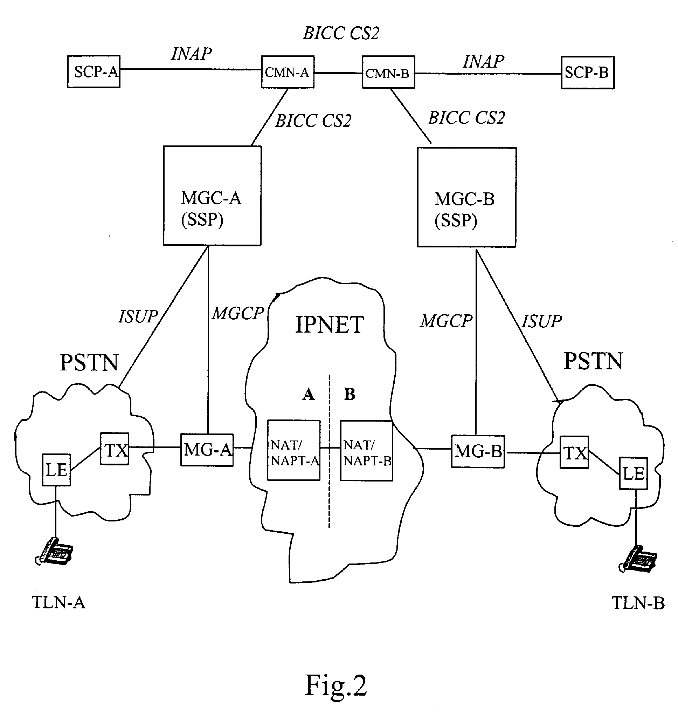

SCP-B gesteuert werden, geändert werden (Figur 2). Bei einem entsprechend der Figur 2 vorgenommenen Verbindungsaufbau würde die IAM dann von der Steuereinheit MGC-A an das CMN-A übertragen, dort geändert und über das CMN-B an das MGC-B weiterübertragen werden. Entsprechendes gilt für die Rücknachricht.

Das erfindungsgemäße Verfahren kann auch in anderen Konstellationen als in der Figur dargestellt zur Anwendung kommen. Beispielsweise können SCP und SSP in Rahmen einer Anordnung realisiert sein, wobei die entsprechenden Funktionen durch die Schaltungslogik und die Software der Anordnung realisiert ist. In diesem Zusammenhang wird in der Fachwelt häufig der Begriff integrated service logic benutzt. Beispielsweise können auch die Funktionen der Dienst-Vermittlungsstelle CMN räumlich zusammen mit einer der Steuereinheiten MGC-A oder MGC-B realisiert sein.

Teilnehmerseitig kann anstelle des Zugangs über ein PSTN-Netz ein sogenanntes residential gateway, d.h. ein Zugangseinrichtung im Zuständigkeitsbereich des Teilnehmers verwendet werden, oder ein teilnehmerseitiges Endgerät sprachbasierte Paketnetzdienste unterstützen (beispielsweise mit Hilfe des H.323 oder des SIP Protokolls).

## Patentansprüche

1. Verfahren zur Änderung von Adressinformationen für Netze mit getrennter Übertragung von Nutzdaten und Signalisierungsinformationen, bei dem
- die Netzwerk-Verwaltung mit Hilfe des IN (Intelligent Network) Konzepts wahrgenommen wird,
- die Nutzdaten über ein Paketnetz (IPNET) übertragen werden,
- bei einem SCP (Service Control Point) Mittel zur Adressänderung bereitgestellt werden,
- zu ändernde Adressinformationen in einem SSP (Service Switching Point) aus den Signalisierungsinformationen extrahiert werden,
- die extrahierten Adressinformationen mit Hilfe eines angepassten INAP (Intelligent Network Application Part) Protokolls an den SCP übermittelt werden,
- in dem SCP mit Hilfe der bereitgestellten Mittel die Änderung der Adressinformationen vorgenommen wird,
- die geänderten Adressinformationen mit Hilfe eines angepassten INAP Protokolls vom SCP zum SSP übertragen werden und
- die geänderten Adressinformationen in die Signalisierungsinformationen eingefügt werden.

2. Verfahren nach Anspruch 1,
**dadurch gekennzeichnet,**
- **dass** eine Änderung der Adressinformationen der Nutzdaten in einem NAT (Network Address Translation) Router oder einem NAT/NAPT (Network Address Translation/Network Address Port Translation) Router vorgenommen wird, die der Änderung der Adressinformationen bei den Signalisierungsinformationen entspricht.

3. Verfahren nach Anspruch 1 oder 2,
**dadurch gekennzeichnet,**
- **dass** die Mittel zu Änderung der Adressinformationen Adresstranslationstäbellen umfassen.

4. Verfahren nach einem der vorhergehenden Ansprüche,
**dadurch gekennzeichnet,**
- **dass** die Adressinformationen IP (Internet Protocol) Adressen und/oder Port-Adressen umfassen.

5. Verfahren nach einem der vorhergehenden Ansprüche,
**dadurch gekennzeichnet,**
- **dass** als Signalisierungsprotokoll das BICC (bearer independent call control) Protokoll, das SIP-T (Session Initiation Protocol) oder ein für Paketnetzübertragung von Nutzdaten angepasstes ISUP (ISDN user part) Protokoll verwendet wird.

6. Verfahren nach einem der vorhergehenden Ansprüche,
**dadurch gekennzeichnet,**
- **dass** als Signalisierungsprotokoll das BICC (bearer independent call control) Protokoll verwendet wird,
- **dass** beim SCP Ressourcen zur Beeinflussung des BICC spezifischen Informationselements BEARER CONTROL INFORMATION bereitgestellt wird,
- **dass** das Informationselement BEARER CONTROL INFORMATION mit einer dafür angepassten INAP Prozedur zum SCP übermittelt wird, und
- **dass** von dem Informationselement BEARER CONTROL INFORMATION umfasste Adressinformationen im SCP aus dem Informationselement extrahiert und geändert werden.

7. Verfahren nach einem der vorhergehenden Ansprüche,
**dadurch gekennzeichnet,**
- **dass** ein neuer INAP Parameter definiert wird, der die zu ändernden Adressinformationen umfasst und
- **dass** mit Hilfe dieses INAP Parameters die zu ändernden Adressinformationen vom SSP zum SCP übermittelt werden.

8. Verfahren nach einem der vorhergehenden Ansprüche,
**dadurch gekennzeichnet,**
- **dass** zumindest eine der INAP Prozeduren INITIAL DP, CONNECT, EventReportBCSM und ContinueWithArgument für die Änderung von Adressinformationen verwendet wird, wobei die verwendeten INAP Prozeduren für die Übermittlung von Adressinformationen bzw. des Informationselements BEARER CONTROL INFORMATION angepasst sind.

9. Verfahren nach einem der vorhergehenden Ansprüche,
**dadurch gekennzeichnet,**
- **dass** im Rahmen des Verfahrens eine Änderung von Adressinformationen beim Übergang zwischen zwei Domänen (A,B) des Paketnetzes vorgenommen wird, wobei
-- die Signalisierungsinformationen über zwei SSP geführt werden, von denen einer jeweils einer Domäne zugeordnet ist und jeweils die Adressänderungen von die zugeordnete Domäne verlassenden Signalisierungsinformationen vornimmt,
-- jedem der SSPs ein SCP zugeordnet ist, der die Änderung der Adressinformationen bewirkt, und
-- die Nutzdaten über zwei NAT Router oder NAT/NAPT Router geführt werden, von denen einer jeweils einer Domäne zugeordnet ist und jeweils die Adressänderungen von die zugeordnete Domäne verlassenden bzw. ankommenden Nutzdaten vornimmt.

10. Verfahren nach Anspruch 9,
**dadurch gekennzeichnet,**
- **dass** die Funktionen der beiden SCPs und der beiden NAT Router bzw. NAT/NATP Router jeweils in einer physikalischen Einheit realisiert werden.

11. Verfahren nach Anspruch 9 oder 10,
**dadurch gekennzeichnet,**
- **dass** die Funktionen der beiden SSPs in einer physikalischen Einheit realisiert werden.

12. Verfahren nach einem der vorhergehenden Ansprüche,
**dadurch gekennzeichnet,**
- **dass** die Funktionen des SSP in einem Media Gateway Controller (MGC) realisiert werden.

13. Verfahren nach einem der vorhergehenden Ansprüche,
**dadurch gekennzeichnet,**
- **dass** die Funktionen des SSP in einem CMN (call mediation node) realisiert werden.

14. Verfahren nach einem der vorhergehenden Ansprüche,
**dadurch gekennzeichnet,**
- **dass** eine Änderung von Adressinformationen während eines Verbindungsaufbaus vorgenommen wird,
- **dass** zur Änderung von Adressinformationen ein APP (application transport parameter) Parameter einer IAM (initial adress message) auf Adressinformationen hin ausgewertet wird, und
- **dass** Adressinformationen des APP Parameters geändert werden.
